# EUROPEAN PATENT APPLICATION

(11) **EP 4 760 824 A1**
(43) Date of publication of application: **17.06.2026**
(21) Application number: 25751131.1
(22) Date of filing: 17.01.2025
(51) Int. Cl.: H01M 4/62, H01M 4/36, H01M 4/38, H01M 10/0525, B82Y 30/00, B82Y 40/00, C01B 32/05, C01B 32/168

(54) **POROUS COMPOSITE ELASTOMER AND SILICON-CARBON, AND PREPARATION METHODS THEREFOR AND USE THEREOF**

(30) Priority: 08.02.2024 CN 202410176696; 04.03.2024 CN 202410244207
(71) Applicant: Carbon One New Energy Group Co., Ltd., Quzhou, Zhejiang 324000 (CN); Zhejiang Lichen New Material Technology Co., Ltd, Huzhou, Zhejiang 313199 (CN)
(72) Inventor: DU, Ning, Quzhou, Zhejiang 324000 (CN); QIU, Xiaoyu, Huzhou, Zhejiang 313199 (CN); YUE, Min, Quzhou, Zhejiang 324000 (CN)
(74) Representative: Vogelbruch, Keang
(86) International application number: PCT/CN2025/073076
(87) International publication number: WO 2025/167529

(57) **Abstract**

The present application relates to the technical field of negative electrode materials for batteries, and in particular relates to a porous composite elastomer and silicon-carbon, and preparation methods therefor and the use thereof. The present application provides a porous composite elastomer, which has a porous structure and comprises a flexible body and a rigid body, which are interpenetrating, wherein a raw material of the flexible body comprises carbon nanotubes, and the rigid body comprises hard carbon. In the present application, a silicon-carbon composite material is prepared by using carbon nanotubes and hard carbon as carbon sources and compounding same with silicon; and compared with a conventional silicon-carbon composite material, the carbon nanotubes, serving as a bridge between the silicon and the hard carbon, effectively improve the conductivity and the ion conducting energy, thereby improving the rate performance of a negative electrode material.

## Description

### Technical Field

The present application relates to the technical field of negative electrode materials for batteries, and in particular relates to a porous composite elastomer and silicon-carbon, and preparation methods therefor and the use thereof.

### Background

Silicon possesses an ultra-high theoretical lithium intercalation capacity and a moderate lithium deintercalation/intercalation potential; therefore, silicon-based negative electrode materials are undoubtedly an ideal next-generation negative electrode material for lithium-ion batteries following graphite. However, the electrical conductivity and ion diffusion coefficient of silicon are extremely poor. Moreover, during the lithium deintercalation/intercalation process, silicon undergoes severe volume expansion (> 300%), which leads to material cracking and pulverization, as well as detachment from the current collector, resulting in rapid capacity fade and cycling deterioration. Although the use of composites of carbon materials and silicon in the prior art can alleviate the volume expansion of silicon and improve cycling performance to a certain extent, such simple physical compounding of silicon and carbon fails to ensure the ion transport performance within the composite material.

Patent (CN 114420928 A) discloses a silicon-carbon composite material with a core-shell structure, which is formed by using carbon nanotubes, graphene, and nano-silicon as core materials and coating same with soft carbon as an outer layer. Carbon nanotubes and graphene can enhance the ion transport capability of the composite material. However, compounding carbon nanotubes, graphene, and silicon by means of milling cannot guarantee the uniformity of the composite, and thus fails to ensure good bulk ion transport performance. Furthermore, the presence of silicon in a micron-sized form leads to severe volume expansion during the lithium deintercalation/intercalation process, which causes a sharp deterioration in the cycling performance of the battery. Patent (CN 115663131 A) utilizes chemical vapor deposition (CVD) to deposit nano-silicon within pelletized carbon nanotubes. Although the reduced size of silicon alleviates volume expansion, the excessively large pores of the shaped spherical carbon nanotubes lead to easy agglomeration of silicon during the deposition process. Furthermore, the larger difference in hardness between carbon nanotubes and silicon causes the material to fracture in the rolling process during electrode preparation; additionally, the volume expansion during the lithium deintercalation/intercalation process leads to material pulverization, eventually resulting in a sharp deterioration in cycling performance.

### SUMMARY

In view of the shortcomings of the prior art mentioned above, an object of the present application is to provide a porous composite elastomer and silicon-carbon, preparation methods therefor and the use thereof.

To achieve the above and other related objects, the present invention is implemented through the following technical solutions.

A first aspect of the present application provides a porous composite elastomer, which has a porous structure and comprises a flexible body and a rigid body, which are interpenetrating, wherein a raw material of the flexible body comprises carbon nanotubes, and the rigid body is hard carbon.

In any embodiment of the present application, the porous composite elastomer contains uniformly distributed micropores and/or mesopores.

In any embodiment of the present application, the mass ratio of the flexible body to the rigid body is (0.01-2) : 1. Preferably, the mass ratio of the flexible body to the rigid body is (0.8-1.2) : 1.

In any embodiment of the present application, the porous composite elastomer has an average pore size of < 15 nm, preferably 1.8-10 nm.

In any embodiment of the present application, the porous composite elastomer has a total pore volume of 0.2-1.5 cm³/g, preferably 0.4-1.1 cm³/g.

In any embodiment of the present application, the porous composite elastomer has a specific surface area of > 200 m²/g, preferably > 700 m²/g.

In any embodiment of the present application, the porous composite elastomer has a D₅₀ of < 30 µm, preferably < 20 µm.

In any embodiment of the present application, the porous composite elastomer has a tap density of 0.1-1.0 g/cm³, preferably 0.2-0.7 g/cm³.

In any embodiment of the present application, the porous composite elastomer has an electrical resistivity of < 5 Ω·cm, preferably < 0.5 Ω·cm, and further preferably < 0.05 Ω·cm.

In any embodiment of the present application, the porous composite elastomer has a pore size concentration of < 7, preferably 0.5-5.

A second aspect of the present application provides a preparation method for the porous composite elastomer described above, which comprises the following steps:
S1: preparation of a carbon tube agglomerate: shaping carbon nanotubes into the carbon tube agglomerate;
S2: preparation of a carbon tube composite carbon material: adding the carbon tube agglomerate to a solution containing a soft template and a polymer, and allowing the solution to infiltrate into the carbon tube agglomerate, followed by a thermal treatment to obtain the carbon tube composite carbon material; and
S3: preparation of a porous composite elastomer: subjecting the carbon tube composite carbon material to a carbonization treatment to obtain the porous composite elastomer.

In any embodiment of the present application, in step S1, the shaping is preferably carried out using a shaping machine; and the shaping machine operates with a main unit frequency of 5-60 Hz, an auxiliary unit frequency of 20-90 Hz and a blower frequency of 8-30 Hz for an operation time of 2-100 min.

In any embodiment of the present application, in step S1, the carbon nanotubes have a length of 0.1-50 µm, and a tube diameter of 2-20 nm.

In any embodiment of the present application, in step S1, the carbon tube agglomerate has a D₅₀ of 1-100 µm.

In any embodiment of the present application, in step S1, the carbon tube agglomerate has a yarn ball-like structure. Preferably, the shaped carbon tube agglomerate is spherical or spheroidal, and the carbon tube agglomerate has a sphericity Sh10% ≥ 0.70, a sphericity Sh50% ≥ 0.80, and a sphericity Sh90% ≥ 0.85.

In any embodiment of the present application, an intermediate modification treatment is further comprised between step S1 and step S2: adding the carbon tube agglomerate to an acidic solution and stirring same, followed by filtration to obtain a solid; and washing the solid until neutral, and drying same to obtain a modified carbon tube agglomerate.

In any embodiment of the present application, the mass ratio of the carbon tube agglomerate to the acidic solution is (0.1-100) : 1.

In any embodiment of the present application, the acidic solution is selected from one or more of nitric acid, sulfuric acid and hydrochloric acid.

In any embodiment of the present application, the reaction under stirring is carried out at a temperature of 30-100°C for 2-12 h.

In any embodiment of the present application, the washing is carried out with pure water; and the drying is carried out in a drying oven. The drying is carried out at a temperature of 60-100°C for 2-48 h.

In any embodiment of the present application, in step S2, a monomer of the polymer is selected from formula I: 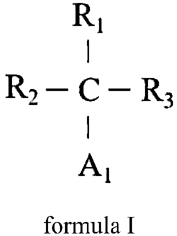 wherein, A₁ is selected from X, OH, NH₂, or a phenyl ring substituted by X, OH, or NH₂; X is a halogen atom selected from F, Cl, Br and I; R₁, R₂, and R₃ are each independently selected from at least one of H, unsubstituted or substituted phenyl, unsubstituted or substituted C₁-C₂₀ alkyl, and unsubstituted or substituted C₁-C₂₀ alkoxy; and a substituent group in the substituted phenyl, a substituent group in the substituted C₁-C₂₀ alkyl, and a substituent group in the substituted C₁-C₂₀ alkoxy are each independently selected from at least one of halogen, OH or NH₂. The polymer is selected from one or more of polyethylene glycol, aqueous polyurethane, polyvinyl alcohol, polyvinylidene fluoride, a fluorinated copolymer, polyimide, polyacrylic acid, polyacrylate, poly(methyl methacrylate), phenolic resin, epoxy resin, or ionic resin.

In any embodiment of the present application, in step S2, the soft template is selected from a nonionic surfactant or an ionic surfactant. Preferably, the nonionic surfactant is selected from a polyoxyethylene-polyoxypropylene copolymer; and the ionic surfactant is selected from hexadecyltrimethylammonium bromide and/or sodium dodecyl sulfonate.

In any embodiment of the present application, in step S2, the mass ratio of the carbon tube agglomerate to the polymer is (0.1-10) : 1. Preferably, the mass ratio of the carbon tube agglomerate to the polymer is 1 : 3.

In any embodiment of the present application, in step S2, the solid content of the polymer in the solution is 20-100%.

In any embodiment of the present application, in step S2, the infiltration of the solution into the carbon tube agglomerate is carried out under a negative pressure; and the negative pressure is -0.9 to -0.01 MPa, and the duration of the negative pressure is 0.5-10 h. The negative pressure is followed by a positive pressure treatment; and a positive pressure is 0.15-2 MPa, and a pressure holding time is 0.5-48 h.

In any embodiment of the present application, in step S2, a solvent is evaporated after the thermal treatment to obtain a carbon tube composite carbon material, and the thermal treatment is carried out at a temperature of 80-200°C for 0.5-50 h.

In any embodiment of the present application, in step S3, the carbonization treatment comprises subjecting the carbon tube composite carbon material to a high-temperature reaction under a protective gas.

In any embodiment of the present application, the protective gas in the carbonization treatment is selected from one or more of nitrogen, neon, argon, krypton, xenon, and radon; and the flow rate of the protective gas is 1-20 L/min.

In any embodiment of the present application, the high-temperature reaction is caried out at a temperature of 500-1000°C for 1-30 h, with a heating rate of 1-10°C/min.

In any embodiment of the present application, a post-treatment step is further comprised after the high-temperature reaction: cooling to room temperature.

A third aspect of the present application provides silicon-carbon, which comprises, as a raw material, the porous composite elastomer described above, and further comprises nano-silicon particles.

In any embodiment of the present application, the nano-silicon particles are embedded in the porous composite elastomer, and the silicon-carbon contains uniformly distributed micropores and/or mesopores.

In any embodiment of the present application, the silicon-carbon has a specific surface area of < 20 m²/g.

In any embodiment of the present application, the silicon-carbon has a D₅₀ of < 20 µm. The silicon-carbon has a tap density of 0.5-2 g/cm³.

In any embodiment of the present application, the content of the nano-silicon particles is 30-70% of the total mass of the silicon-carbon. The silicon-carbon has an electrical resistivity of < 20 Ω·cm.

In any embodiment of the present application, the silicon-carbon has a specific capacity of > 1200 mAh/g, an initial coulombic efficiency of > 89%, a capacity retention rate after 500 cycles of > 85%, and a 4C/1C rate performance of > 90%.

A fourth aspect of the present application provides a preparation method for the silicon-carbon described above, comprising: subjecting the porous composite elastomer and a silicon source-containing gas to vapor deposition in a high-temperature environment to obtain the silicon-carbon.

In any embodiment of the present application, the high-temperature environment is a deposition furnace, with a high temperature of 300-600°C and a holding time of 1-50 h; and preferably, the internal pressure of the deposition furnace is maintained at 5-10 MPa, and the heating rate is 1-5°C /min.

In any embodiment of the present application, the silicon source gas is selected from one or more of silane, disilane, dichlorosilane, and trichlorosilane; and the carbon source gas is selected from alkane gases having a pyrolysis temperature of 600°C or less.

In any embodiment of the present application, the silicon source-containing gas further comprises a carbon source gas.

In any embodiment of the present application, the time for the vapor deposition is 1-50 h. Preferably, the time for the vapor deposition is 10-30 h.

In any embodiment of the present application, when the silicon source-containing gas is only the silicon source gas, the flow rate of the gas is 1-20 L/min.

In any embodiment of the present application, when the silicon source-containing gas comprises the silicon source gas and the carbon source gas, the volume percentage of the silicon source gas is 70-99%, and the volume percentage of the carbon source gas is 1-30%, based on the total volume of the gas; and the flow rate of the gas is 5-20 L/min.

A fifth aspect of the present application provides a carbon-coated silicon-carbon, comprising the silicon-carbon described above and a carbon coating layer coated on the surface of the silicon-carbon.

In any embodiment of the present application, the carbon-coated silicon-carbon has a carbon coating amount of 0.5-10 wt%. Preferably, the carbon coating amount of the carbon-coated silicon-carbon is 0.5-5 wt%.

In any embodiment of the present application, the carbon-coated silicon-carbon has a median particle size D₅₀ of < 20 µm.

In any embodiment of the present application, the carbon-coated silicon-carbon has a silicon content of 20-80 wt%.

In any embodiment of the present application, the carbon-coated silicon-carbon has a specific surface area of 0.5-20.0 m²/g.

In any embodiment of the present application, the carbon-coated silicon-carbon has a powder compaction density of 0.5-2 g/cm³.

A sixth aspect of the present application provides a preparation method for the carbon-coated silicon-carbon described above, comprising introducing a mixed gas comprising a protective gas and a carbon source gas to coat a silicon-carbon, so as to form the carbon-coated silicon-carbon.

In any embodiment of the present application, the carbon source gas is selected from alkane gases having a pyrolysis temperature of 600°C or less.

In any embodiment of the present application, the protective gas is selected from one or more of nitrogen, neon, argon, krypton, xenon, and radon.

In any embodiment of the present application, the volume percentage of the carbon source gas is 60-80%, and the volume percentage of the protective gas is 20-40%, based on the total volume of the mixed gas. The flow rate of the mixed gas is 0.1-50 L/min, preferably 5-20 L/min.

A seventh aspect of the present application provides a silicon-carbon composite negative electrode material, which comprises, as a raw material, the porous composite elastomer described above, the silicon-carbon described above, or the carbon-coated silicon-carbon described above.

An eighth aspect of the present application provides the use of the porous composite elastomer described above, the silicon-carbon described above, the carbon-coated silicon-carbon described above, or the silicon-carbon composite negative electrode material described above in the preparation of a battery product.

A ninth aspect of the present application provides a lithium-ion battery, comprising, as a raw material, the porous composite elastomer described above, the silicon-carbon described above, the carbon-coated silicon-carbon described above, or the silicon-carbon composite negative electrode material described above.

Compared with the prior art, the present application has the beneficial effects as follows:
1. In the present application, a silicon-carbon composite material is prepared by using carbon nanotubes and hard carbon as carbon sources and compounding same with silicon; and compared with a conventional silicon-carbon composite material, the carbon nanotubes, serving as a bridge between the silicon and the hard carbon, effectively improve the conductivity and the ion conducting energy, thereby improving the rate performance of a negative electrode material.
2. In the present application, yarn ball-like carbon tubes are used to construct a macroporous material to accommodate ordered micro-mesoporous carbon with a moderate hardness, which then accommodate elemental nano-silicon with an excessive hardness. On the one hand, the ordered micro-mesoporous carbon with a higher strength is categorized as hard carbon, which provides the composite material with a higher strength and thus can significantly reduce the risk of the negative electrode material being fractured during the rolling process in electrode plate fabrication, thereby enhancing the processing safety during electrode plate fabrication. On the other hand, the flexible carbon tubes provide the composite material with a certain degree of elasticity and ductility, which can prevent the composite material from detaching from the electrode plate due to volume expansion during the charge-discharge process, thus avoiding a sharp deterioration in cycling performance of the battery.
3. In the present application, pores are formed via a soft template method through a simple heating process, which significantly simplifies the preparation process of porous carbon compared to existing activation-based pore formation techniques.

### Brief Description of the Drawings

FIG. 1 shows a schematic diagram of the preparation process of the silicon-carbon in the present application.
FIG. 2 shows an SEM image of the CNT agglomerate of the present application.
FIG. 3 shows an SEM image of the CNT composite carbon material of the present application.
FIG. 4 shows an SEM image of the porous composite elastomer of the present application.
FIG. 5 shows an SEM image of the silicon-carbon of the present application.

### DETAILED DESCRIPTION OF EMBODIMENTS

In order to make the objects, technical solutions and beneficial effects of the present application clearer, the present application will be further illustrated below with reference to embodiments. It should be understood that the embodiments are merely used to explain the present application and are not intended to limit the scope of the present application. Unless otherwise specified, the test methods used in the embodiments below are all conventional methods, and those skilled in the art would have readily understood other advantages and effects of the present application from the content disclosed in this description.

The "range" disclosed in the present application is defined in the form of a lower limit and an upper limit. A given range is defined by selecting a lower limit and an upper limit, and the selected lower and upper limits define the boundaries of that specific range. The ranges defined in such a manner may include or exclude the endpoints, and can be combined arbitrarily; that is, any lower limit can be combined with any upper limit to form a range. For example, if ranges of 60-120 and 80-110 are recited for a specific parameter, it should be understood that ranges of 60-110 and 80-120 can also be expected. Furthermore, if minimum range values of 1 and 2 are recited, and maximum range values of 3, 4, and 5 are recited, then all of the following ranges can be expected: 1-3, 1-4, 1-5, 2-3, 2-4 and 2-5. In the present application, unless otherwise stated, the numerical range "a-b" represents a shorthand representation of any combination of real numbers between a and b, where a and b are both real numbers. For example, a numerical range of "0-5" means that all real numbers between "0-5" are fully recited herein, and "0-5" is merely a shorthand representation of the combinations of these numerical values. Furthermore, when a parameter is expressed as an integer ≥ 2, it is equivalent to disclosing that the parameter is, for example, an integer such as 2, 3, 4, 5, 6, 7, 8, 9, 10, 11, 12, and so on.

Implementations of the present invention will be illustrated below by way of specific embodiments, and those skilled in the art would have readily understood other advantages and effects of the present invention from the content disclosed in this specification. The present invention may further be implemented or applied by other different specific implementations, and various modifications or changes may also be performed on the details in this specification on the basis of different perspectives and applications without departing from the spirit of the present invention.

Prior to the further description of the specific implementations of the present invention, it should be understood that the scope of protection of the present invention is not limited to the following particular specific embodiments; and it should also be understood that the terms used in the embodiments of the present invention are intended to describe specific implementations, rather than limiting the scope of protection of the present invention. In the following examples, conventional conditions or conditions suggested by the manufacturers are generally used, unless specific conditions indicated in an experimental method.

Unless defined otherwise, all technical and scientific terms used in the present invention have the same meanings commonly understood by those skilled in the art. In addition to the specific methods, devices, and materials used in the examples, according to the knowledge in the prior art and the description of the present invention, those skilled in the art can also use any prior art methods, devices, and materials which are similar or equivalent to the methods, devices, and materials described in the examples of the present invention to realize the present invention.

Through extensive exploration and research, the inventors of the present application have developed a silicon-carbon composite negative electrode material with high cycling performance and high rate performance, and a preparation method therefor. In the present application, carbon nanotubes are first wound into an ultra-large pore yarn ball-like microsphere or microsphere-like structure, wherein the carbon tubes are interconnected, which can ensure the ion conduction and electrical conductivity to the greatest extent. Subsequently, a polymer carbon source material mixed with a soft template is used to fill the loose macropores of the yarn ball-like structure, followed by low-temperature curing and high-temperature carbonization for pore formation to form a CNT ordered micro/mesoporous carbon framework, on which base framework, silicon is further deposited by means of CVD to prepare a silicon-carbon composite negative electrode material. The material is rich in carbon nanotubes, and thus possesses good ionic and electronic transport properties; and in the material, the flexible carbon nanotubes is filled with disordered carbon, thereby ensuring the strength of the composite structure to a certain extent; moreover, a CNT ordered porous carbon composite material is prepared by performing template-mediated pore formation on the disordered carbon via high-temperature carbonization, and based on this ordered porous material, silicon deposition via CVD can ensure the uniform compounding of elemental silicon.

A first aspect of the present application provides a porous composite elastomer, which has a porous structure and comprises a flexible body and a rigid body, which are interpenetrating, wherein a raw material of the flexible body comprises carbon nanotubes, and the rigid body includes hard carbon. The mass ratio of the flexible body to the rigid body is (0.01-2) : 1, and specifically may be (0.01-0.5) : 1, (0.5-1.0) : 1, (1.0-1.5) : 1, or (1.5-2.0) : 1, or the like. Preferably, the mass ratio of the flexible body to the rigid body is (0.8-1.2) : 1. In a specific embodiment of the present application, the length of the carbon nanotubes is 0.1-50 µm, and specifically may be 0.1-1 µm, 1-10 µm, 10-20 µm, 20-30 µm, 30-40 µm, or 40-50 µm, or the like; and the tube diameter is 2-20 nm, and specifically may be 2-10 nm, 10-15 nm, 15-20 nm, or the like. The D₅₀ of the carbon tube agglomerate is 1-100 µm, and specifically may be 1-10 µm, 10-50 µm, 50-100 µm, or the like.

In the porous composite elastomer provided by the present application, the porous composite elastomer contains uniformly distributed micropores and/or mesopores. The porous composite elastomer has an average pore size of < 15 nm, preferably 1.8-10 nm. The porous composite elastomer has a total pore volume of 0.2-1.5 cm³/g, preferably 0.4-1.1 cm3/g. The porous composite elastomer has a specific surface area of > 200 m²/g, preferably > 700 m²/g, and more preferably 600-1200 m²/g. The porous composite elastomer has a D₅₀ of < 30 µm, preferably < 20 µm, and more preferably 4-8 µm. The porous composite elastomer has a tap density of 0.1-1.0 g/cm³, preferably 0.2-0.7 g/cm³. The porous composite elastomer has an electrical resistivity of < 5 Ω·cm, preferably < 0.5 Ω·cm, and more preferably < 0.05 Ω·cm. The porous composite elastomer has a pore size concentration of < 7, preferably 0.5-5, wherein the pore size concentration = (V₉₀ - V₁₀)/V₅₀; where V₁₀ refers to the pore size corresponding to a pore volume distribution percentage reaching 10%, V₅₀ refers to the pore size corresponding to a pore volume distribution percentage reaching 50%, and V₉₀ refers to the pore size corresponding to a pore volume distribution percentage reaching 90%.

A second aspect of the present application provides a preparation method for the porous composite elastomer described above, which comprises the following steps:
S1: preparation of a carbon tube agglomerate: shaping carbon nanotubes into the carbon tube agglomerate;
S2: preparation of a carbon tube composite carbon material: adding the carbon tube agglomerate to a solution containing a soft template and a polymer, and allowing the solution to infiltrate into the carbon tube agglomerate, followed by a thermal treatment to obtain the carbon tube composite carbon material; and
S3: preparation of a porous composite elastomer: subjecting the carbon tube composite carbon material to a carbonization treatment to obtain the porous composite elastomer.

In any embodiment of the present application, step S1 involves the preparation of a carbon tube agglomerate: shaping carbon nanotubes into the carbon tube agglomerate.

In the preparation method provided by the present application, in step S1, the shaping is carried out using a shaping machine, and the shaping machine preferably operates with a main unit frequency of 5-60 Hz, which specifically may be 5-10 Hz, 10-20 Hz, 20-60 Hz, or the like; an auxiliary unit frequency of 20-90 Hz, specifically 20-30 Hz, 30-50 Hz, 50-90 Hz, or the like; and a blower frequency of 8-30 Hz, specifically 8-10 Hz, 10-20 Hz, 20-30 Hz, or the like. The operation time is 2-100 min, and specifically may be 2-10 min, 10-50 min, 50-100 min, or the like.

In the preparation method provided by the present application, in step S1, the length of the carbon nanotubes is 0.1-50 µm, and specifically may be 0.1-1 µm, 1-10 µm, 10-20 µm, 20-30 µm, 30-40 µm, or 40-50 µm, or the like; and the tube diameter is 2-20 nm, and specifically may be 2-10 nm, 10-15 nm, 15-20 nm, or the like. The median particle size D₅₀ of the carbon tube agglomerate is 1-100 µm, and specifically may be 1-10 µm, 10-50 µm, 50-100 µm, or the like. The shaped carbon tube agglomerate has a yarn ball-like structure. Preferably, the shaped carbon tube agglomerate is spherical or spheroidal, and the carbon tube agglomerate has a sphericity Sh10% ≥ 0.70, a sphericity Sh50% ≥ 0.80, and a sphericity Sh90% ≥ 0.85, where the sphericity Sh10% refers to the sphericity corresponding to a particle size distribution percentage reaching 10%; the sphericity Sh50% refers to the sphericity corresponding to a particle size distribution percentage reaching 50%; and the sphericity Sh90% refers to the sphericity corresponding to a particle size distribution percentage reaching 90%.

In the preparation method provided by the present application, an intermediate modification treatment is further comprised between step S1 and step S2: adding the carbon tube agglomerate to an acidic solution and stirring same under reflux, followed by filtration to obtain a solid; and washing the solid until neutral, and drying same to obtain a modified carbon tube agglomerate. The mass ratio of the carbon tube agglomerate to the acidic solution is (0.1-100) : 1; and specifically may be (0.1-10) : 1, (10-50) : 1, (50-100) : 1, or the like.

In the preparation method provided by the present application, the acidic solution is selected from one or more of nitric acid, sulfuric acid and hydrochloric acid. The temperature of the reaction under stirring is 30-100°C, and specifically may be 30-40°C, 40-50°C, 50-100°C, or the like; and the duration of the reaction under stirring is 2-12 h, and specifically may be 2-4 h, 4-8 h, 8-12 h, or the like. The washing is carried out with pure water; and the drying is carried out in a drying oven. The drying temperature is 60-100°C, and specifically may be 60-70°C, 70-80°C, 80-100°C, or the like; and the drying time is 2-48 h, and specifically may be 2-12 h, 12-24 h, 24-48 h, or the like. The function of the intermediate modification treatment is to modify the carbon tube agglomerate, and a functional group such as carboxyl and amino groups is generated on the modified carbon tube agglomerate. When the agglomerate is modified with a carboxyl group, same can load -NH₂ or -OH group from the polymer through chemical bonding or physical bonding.

In the preparation method provided by the present application, step S2 involves the preparation of a carbon tube composite carbon material: adding the carbon tube agglomerate to a solution containing a soft template and a polymer, and allowing the solution to infiltrate into the carbon tube agglomerate, followed by a thermal treatment to obtain the carbon tube composite carbon material.

In the preparation method provided by the present application, a polymer having a specific functional group is used, which necessitates an intermediate modification treatment of the carbon tube agglomerate, such that the polymer fills the pores of the carbon tube agglomerate via chemical bonding or hydrogen bonding. Where the intermediate modification treatment is required, the polymer monomer used is selected from formula I: 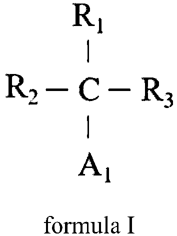 wherein, A₁ is selected from X, OH, NH₂, or a phenyl ring substituted by X, OH, or NH₂; X is a halogen atom selected from F, Cl, Br and I; R₁, R₂, and R₃ are each independently selected from at least one of H, unsubstituted or substituted phenyl, unsubstituted or substituted C₁-C₂₀ alkyl, and unsubstituted or substituted C₁-C₂₀ alkoxy; and a substituent group in the substituted phenyl, a substituent group in the substituted C₁-C₂₀ alkyl, and a substituent group in the substituted C₁-C₂₀ alkoxy are each independently selected from at least one of halogen, OH or NH₂. The polymer is selected from one or more of polyethylene glycol, aqueous polyurethane, polyvinyl alcohol, polyvinylidene fluoride, a fluorinated copolymer, polyimide, polyacrylic acid, polyacrylate, poly(methyl methacrylate), phenolic resin, epoxy resin, or ionic resin. Preferably, the fluorinated copolymer is selected from a copolymer of 1,1-difluoroethylene and hexafluoroethylene.

In step S2 of the preparation method provided by the present application, when the polymer is selected from one or more of phenolic resin, epoxy resin, ion resin, or the like, either carbon tube agglomerate that undergoes intermediate modification or unmodified carbon tube agglomerate can be selected, and in this case, the polymer fills the pores of the carbon tube agglomerate via curing.

In the preparation method provided by the present application, in step S2, the soft template is selected from a nonionic surfactant or an ionic surfactant; preferably, the nonionic surfactant is selected from a polyoxyethylene-polyoxypropylene copolymer; the ionic surfactant is selected from hexadecyltrimethylammonium bromide and/or sodium dodecyl sulfonate; and more preferably, the nonionic surfactant is selected from reagents such as F108, F127, F68, or Pluronic.

In the preparation method provided by the present application, in step S2, the mass ratio of the carbon tube agglomerate to the polymer is (0.1-10) : 1, and specifically may be (0.1-1) : 1, (1-5) : 1, (5-10) : 1, or the like. In a preferred embodiment of the present application, the mass ratio of the carbon tube agglomerate to the polymer is 1 : 3.

In the preparation method provided by the present application, in step S2, the solid content of the polymer in the solution is 20-100%, and specifically 20-30%, 30-50%, 50-100%, or the like.

In the preparation method provided by the present application, in step S2, the infiltration of the solution into the carbon tube agglomerate is carried out under a negative pressure; and the negative pressure is -0.9 to -0.01 MPa, and specifically may be -0.9 to -0.1 MPa, -0.1 to - 0.05 MPa, -0.05 to -0.01 MPa, or the like; and the duration of the negative pressure is 0.5-10 h, and specifically may be 0.5-1 h, 1-2 h, 2-10 h, or the like. The negative pressure is followed by a positive pressure treatment; and a positive pressure is 0.15-2 MPa, and a pressure holding time is 0.5-48 h. Preferably, the positive pressure is 0.6-1 MPa; and the pressure holding time is 2-12 h.

In the preparation method provided by the present application, in step S2, the temperature of the thermal treatment is 80-200°C, and specifically may be 80-100°C, 100-150°C, 150-200°C, or the like; and the duration of the thermal treatment is 0.5-50 h, and specifically may be 0.5-1 h, 1-5 h, 5-50 h, or the like.

In the preparation method provided by the present application, step S3 involves the preparation of a porous composite elastomer: subjecting the carbon tube composite carbon material to a carbonization treatment to obtain the porous composite elastomer.

The carbonization treatment involves carbonizing the carbon tube composite carbon material via a high-temperature reaction under a protective gas to form pores. The protective gas in the carbonization treatment is selected from one or more of nitrogen, neon, argon, krypton, xenon, and radon; and the flow rate of the protective gas is 1-20 L/min, and specifically may be 1-10 L/min, 10-15 L/min, 15-20 L/min, or the like. The temperature of the carbonization for pore formation is 500-1000°C, and specifically may be 500-700°C, 700-800°C, 800-1000°C, or the like. The duration of the carbonization for pore formation is 1-30 h, and specifically may be 1-10 h, 10-15 h, 15-30 h, or the like. The heating rate is 1-10°C/min, and specifically may be 1-3°C/min, 3-5°C/min, 5-10°C/min, or the like. A post-treatment step is further comprised after the high-temperature reaction: cooling to room temperature.

The porous composite elastomer has a sponge-like shape, and the pores thereof are uniformly distributed. Pores can be formed in step S3 because, after the high-temperature carbonization, the polymer in the carbon tube composite carbon material undergoes thermal decomposition to form hard carbon. The hard carbon fills the pores of the carbon tube agglomerate, resulting in a composite elastomer in which the hard carbon and the carbon tubes are interpenetrating. Furthermore, during the high-temperature carbonization process, the thermal decomposition of the polymer generates gases, thereby forming pores in the interior and on the surface of the composite elastomer, resulting in a composite elastomer with a porous structure. The uniformity of the pore distribution in this step is determined by the temperature and the heating rate. In the present technology, pores are formed via a soft template method through a simple heating process, which significantly simplifies the preparation process of porous carbon compared to existing activation-based pore formation techniques.

A third aspect of the present application provides silicon-carbon, which comprises, as a raw material, the porous composite elastomer described above, and further comprises nano-silicon particles.

In the silicon-carbon provided by the present application, the nano-silicon particles are embedded in the porous composite elastomer, and the silicon-carbon contains uniformly distributed micropores and/or mesopores. The silicon-carbon has a specific surface area of < 20 m²/g. The silicon-carbon has a total pore volume of < 0.05 m²/g. The silicon-carbon has a D₅₀ of < 20 µm, preferably 100 nm - 12 µm. The silicon-carbon has a tap density of 0.5-2 g/cm³.

In the silicon-carbon provided by the present application, the content of the nano-silicon particles is 30-70% of the total mass of the silicon-carbon. The silicon-carbon has a specific capacity of > 1200 mAh/g, an initial coulombic efficiency of > 89%, a capacity retention rate after 500 cycles of > 85%, and a 4C/1C rate performance of > 90%. C is used to represent the charge and discharge rate of a battery. 1 C represents the current intensity when the battery is completely discharged in one hour. 4 C represents the current intensity when the battery is completely discharged in four hours.

A fourth aspect of the present application provides a preparation method for the silicon-carbon described above, comprising: subjecting the porous composite elastomer and a silicon source-containing gas to vapor deposition in a high-temperature environment to obtain the silicon-carbon. The high-temperature environment is a deposition furnace, and the high temperature is 300-600°C, and specifically may be 300-400°C, 400-500°C, 500-600°C, or the like; the holding time is 1-50 h, and specifically may be 1-10 h, 10-20 h, 20-50 h, or the like; and preferably, the internal pressure of the deposition furnace is maintained at 5-10 MPa, and the heating rate is 1-5°C /min. The silicon source-containing gas undergoes pyrolysis at high temperatures, whereby atoms such as H and Cl volatilize, and silicon forms nano-silicon particles and is deposited within the pores of the porous composite elastomer.

In the preparation method for silicon-carbon provided by the present application, the silicon source gas is selected from one or more of silane, disilane, dichlorosilane, and trichlorosilane; and the carbon source gas is selected from alkane gases having a pyrolysis temperature of 600°C or less, and preferably, the carbon source gas is selected from acetylene and/or ethylene.

In the preparation method for silicon-carbon provided by the present application, when the silicon source-containing gas is only the silicon source gas, the flow rate of the gas is 1-20 L/min, and specifically may be 1-10 L/min, 10-15 L/min, 15-20 L/min, preferably 2-10 L/min. The silicon source-containing gas further comprises a carbon source gas. When the silicon source-containing gas comprises a silicon source gas and a carbon source gas, the volume percentage of the silicon source gas is 70-99%, and the volume percentage of the carbon source gas is 1-30%, based on the total volume of the gas. The total flow rate of the gas is 5-20 L/min, and specifically may be 5-10 L/min, 10-15 L/min, 15-20 L/min, or the like. When the silicon source-containing gas comprises both a carbon source gas and a silicon source gas, the carbon source gas spatially restricts the silicon source gas, preventing all the silicon from falling into the same pore.

A fifth aspect of the present application provides a carbon-coated silicon-carbon, comprising the silicon-carbon described above and a carbon coating layer coated on the surface of the silicon-carbon.

In the carbon-coated silicon-carbon provided by the present application, the carbon coating amount of the carbon-coated silicon-carbon composite negative electrode material is 0.5-10 wt%, preferably 0.5-5 wt%. The carbon-coated silicon-carbon composite negative electrode material has a median particle size D₅₀ of < 20 µm, which specifically may be 4-10 µm, 10-15 µm, 15-20 µm, or the like; a silicon content of 20-80 wt%, which specifically may be 20-30 wt%, 30-40 wt%, 40-50 wt%, 50-60 wt%, 60-70 wt%, 70-80 wt%, or the like; a specific surface area of 0.5-20.0 m²/g, which specifically may be 0.5-10.0 m²/g, 10.0-15.0 m²/g, 15.0-20.0 m²/g, or the like; a pore volume of < 0.1 cm³g⁻¹; and a powder compaction density of 0.5-2 g/cm³, which specifically may be 0.5-0.7 g/cm³, 0.7-0.9 g/cm³, 0.9-1.2 g/cm³, 1.2-1.5 g/cm³, 1.5-2 g/cm³, or the like.

A sixth aspect of the present application provides a preparation method for the carbon-coated silicon-carbon described above, comprising introducing a mixed gas comprising a protective gas and a carbon source gas to coat a silicon-carbon, so as to form the carbon-coated silicon-carbon.

In the preparation method provided by the present application, the carbon source gas is selected from alkane gases having a pyrolysis temperature of 600°C or less, and preferably, the carbon source gas is selected from acetylene and/or ethylene. The protective gas is selected from one or more of nitrogen, neon, argon, krypton, xenon, and radon. The volume percentage of the carbon source gas is 60-80%, and the volume percentage of the protective gas is 20-40%, based on the total volume of the mixed gas. The flow rate of the mixed gas is 0.1-50 L/min, and specifically may be 0.1-10 L/min, 10-20 L/min, 20-50 L/min, or the like, preferably 5-20 L/min. The function of the mixed gas is to further coat a carbon protective layer.

A seventh aspect of the present application provides a silicon-carbon composite negative electrode material, which comprises, as a raw material, the porous composite elastomer described above, the silicon-carbon described above, or the carbon-coated silicon-carbon described above. In the present technology, a silicon-carbon composite material is prepared by using carbon nanotubes and hard carbon as carbon sources and compounding same with silicon; and compared with a conventional silicon-carbon composite material, the carbon nanotubes, serving as a bridge between the silicon and the hard carbon, effectively improve the conductivity and the ion conducting energy, thereby improving the rate performance of a negative electrode material. In the present application, yarn ball-like carbon tubes are used to construct a macroporous material to accommodate ordered micro-mesoporous carbon with a moderate hardness, which then accommodate elemental nano-silicon with an excessive hardness. On the one hand, the ordered micro-mesoporous carbon with a higher strength is categorized as hard carbon, which provides the composite material with a higher strength and thus can significantly reduce the risk of the negative electrode material being fractured during the rolling process in electrode plate fabrication, thereby enhancing the processing safety during electrode plate fabrication. On the other hand, the flexible carbon tubes provide the composite material with a certain degree of elasticity and ductility, which can prevent the composite material from detaching from the electrode plate due to volume expansion during the charge-discharge process, thus avoiding a sharp deterioration in cycling performance of the battery.

An eighth aspect of the present application provides the use of the porous composite elastomer described above, the silicon-carbon described above, the carbon-coated silicon-carbon described above, or the silicon-carbon composite negative electrode material described above in the preparation of a battery product.

A ninth aspect of the present application provides a lithium-ion battery, comprising, as a raw material, the porous composite elastomer described above, the silicon-carbon described above, the carbon-coated silicon-carbon described above, or the silicon-carbon composite negative electrode material described above.

The present application is further illustrated below through examples, which should not be construed as limiting the scope of the present application.

### Example 1

(1) CNT agglomerate: carbon nanotubes having a length of 10 µm and a tube diameter of 5 nm were shaped using a shaping machine with a main unit frequency of 30 Hz, an auxiliary unit frequency of 60 Hz and a blower frequency of 10 Hz for an operation time of 60 min to produce a material with a spheroidal yarn ball-like structure. The CNT agglomerate had a median particle size D₅₀ of 5.6 µm, a sphericity Sh10% of 0.75, a sphericity Sh50% of 0.85, a sphericity Sh90% of 0.88, an average pore size of 38.5 nm, a pore volume of 1.69 cm³/g, a specific surface area of 175.8 m²/g, a tap density of < 0.15 g/cm³, and an electrical resistivity of < 0.005 Ω·cm.
(2) Modified CNT agglomerate: the carbon nanotubes with a yarn ball-like structure were added to a 65% nitric acid solution in a mass ratio of 1 : 1 and stirred and reacted at 100°C for 6 h; and after separation via filtration, a solid was obtained, then washed with pure water until neutral, and then dried in an oven at 80°C for 10 h to obtain the modified carbon tube agglomerate.
(3) CNT composite carbon material: CTAB was added to an aqueous polyethylene glycol solution with a solid content of 50%, and then the modified carbon tube agglomerate was added at a mass ratio of polyethylene glycol : the modified carbon tube agglomerate of 1 : 1, followed by stirring and mixing. The aqueous polyethylene glycol solution was then infiltrated uniformly into the yarn ball-like agglomerate under -0.50 MPa, and after maintaining this pressure for 2 h to ensure the complete infiltration of the solution, the system was slowly heated at 100°C for 5 h to allow for the slow evaporation of the solvent. The pores of the modified carbon tube agglomerate were filled with the polymer via bonding, thus resulting in the CNT composite carbon material.
(4) CNT porous carbon: the CNT composite carbon material was placed in a high-temperature furnace, argon was introduced at a flow rate of 10 L/min, and the CNT composite carbon material was heated to 800°C at a rate of 2°C /min for high-temperature carbonization and pore formation. After carbonization for 10 h, the furnace was naturally cooled to room temperature while maintaining the protective atmosphere, thus yielding a sponge-like CNT porous carbon with a uniform pore distribution, that is, a porous elastic composite. The porous elastic composite had a median particle size D₅₀ of 6.5 µm, an average pore size of 2.62 nm, a pore volume of 0.98 cm³/g, a specific surface area of 876.7 m²/g, a pore size concentration of 2.5, a tap density of 0.33 g/cm³, and an electrical resistivity of 0.04 Ω·cm.
(5) Preparation of silicon-carbon negative electrode material: the composite material obtained in step (4) was placed in a deposition furnace and heated to 500°C, then a mixed gas of a silicon source gas and a carbon source gas (70% of silane, and 30% of acetylene) was introduced into the deposition furnace at a flow rate of 10 L/min, and after adjusting the pressure valve of the exhaust pipe and continuously introducing the gas for vapor deposition for 5 h, silicon-carbon was obtained, which can be directly used as a silicon-carbon composite negative electrode material.

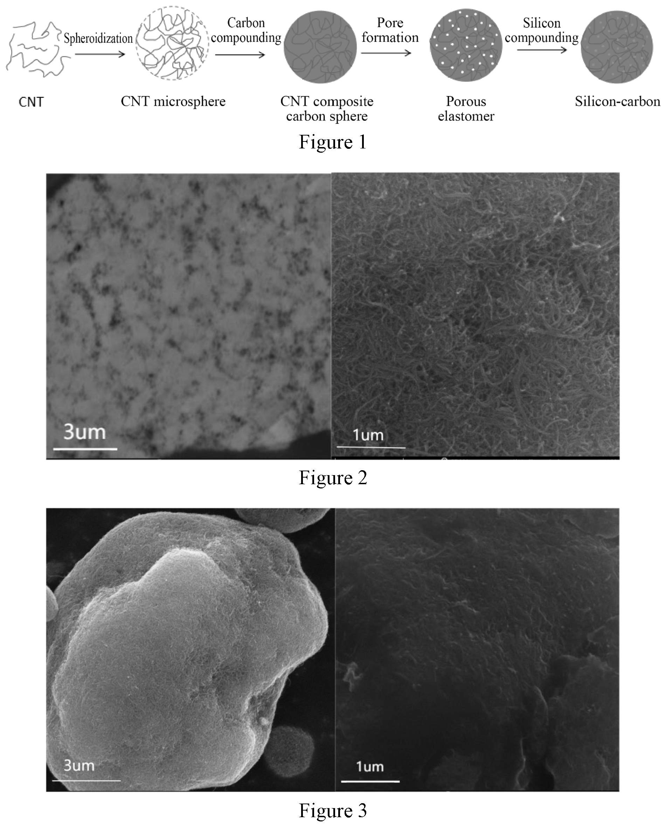

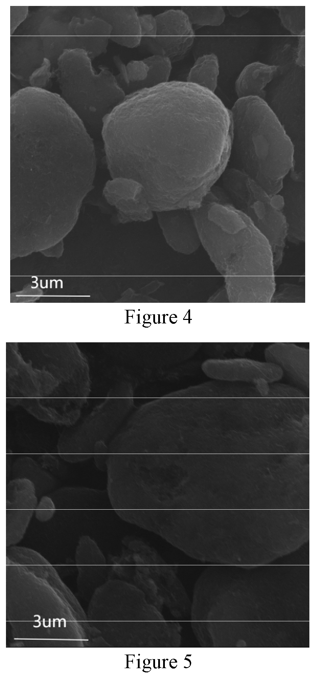

The preparation process is shown in FIG. 1, and the SEM images for each stage are shown in FIGs. 2-5. The material property data for each preparation stage are shown in Table 1:

**Table 1 Material property data for each stage**

| Product name | Specific surface area (m²/g) | Pore volume (cm³/g) | Average pore size (nm) | D₅₀ (µm) | Tap density (g/cm³) | Electrical resistivity (Ω·cm) (20 MPa) |
|---|---|---|---|---|---|---|
| Carbon tube agglomerate | 175.8 | 1.69 | 38.5 | 5.6 | < 0.15 | < 0.005 |
| Carbon tube composite elastomer | 213.2 | 0.35 | 33.4 | 6.3 | 0.33 | 0.5 |
| Porous composite elastomer | 876.7 | 0.98 | 2.62 | 6.5 | 0.33 | 0.04 |
| Silicon-carbon composite negative electrode material | 13.5 | < 0.05 | / | 7.8 | 1.01 | 18 |

### Example 2

This example differed from Example 1 in that phenolic resin was selected as the polymer;
(3) carbon tube composite elastomer: CTAB was added to a phenolic resin-ethanol solution with a solid content of 50%, and then the modified carbon tube agglomerate was added at a mass ratio of phenolic resin : the modified carbon tube agglomerate of 1 : 1, followed by stirring and mixing. The phenolic resin-ethanol solution was then infiltrated uniformly into the yarn ball-like agglomerate under -0.50 MPa, and after maintaining this pressure for 2 h to ensure the complete infiltration of the solution, the system was slowly heated at 120°C for 5 h to allow for the slow evaporation of the solvent. The pores of the modified carbon tube agglomerate were filled with the phenolic resin via curing and bonding, thus resulting in the carbon tube composite elastomer.

### Example 3

This example differed from Example 1 in that polyimide was selected as the polymer;
(3) carbon tube composite elastomer: CTAB was added to a polyimide-NMP solution with a solid content of 50%, and then the modified carbon tube agglomerate was added at a mass ratio of polyimide : the modified carbon tube agglomerate of 1 : 1, followed by stirring and mixing. The polyimide-NMP solution was then infiltrated uniformly into the yarn ball-like agglomerate under -0.50 MPa, and after maintaining this pressure for 2 h to ensure the complete infiltration of the solution, the system was slowly heated at 120°C for 5 h to allow for the slow evaporation of the solvent. The pores of the modified carbon tube agglomerate were filled with the polyimide via hydrogen bonding, thus resulting in the CNT composite carbon material.

### Example 4

This example differed from Example 1 in that an epoxy resin was selected as the polymer;
(3) carbon tube composite elastomer: CTAB was added to an epoxy resin-toluene solution with a solid content of 50%, and then the carbon tube agglomerate was added at a mass ratio of epoxy resin : the carbon tube agglomerate of 1 : 1, followed by stirring and mixing; and the epoxy resin-toluene solution was then infiltrated uniformly into the yarn ball-like agglomerate at 120°C and -0.50 MPa, and after maintaining this pressure for 2 h to ensure the complete infiltration of the solution, the system was slowly cooled to room temperature. The pores of the modified carbon tube agglomerate were filled with the epoxy resin via curing, thus resulting in the CNT composite carbon material.

### Comparative Example 1

This example differed from Example 1 in that step (3) was omitted, and no polymer was compounded.

### Comparative Example 2

This example differed from Example 1 in that step (4) was omitted, resulting in no pore formation.

### Comparative Example 3

This example differed from Example 1 in that steps (1) - (3) were omitted, and the carbon source for the porous carbon was replaced from the carbon tube composite elastomer with a polymer.

The negative electrode materials prepared in the examples and comparative examples were respectively assembled into batteries.
(1) Preparation of positive electrode plate: lithium nickel cobalt manganese oxide (NCM811) as a positive electrode active material, Super P as a conductive agent, carbon nanotubes, and polyvinylidene fluoride (PVDF) as a binder, in a mass ratio of 97 : 1 : 0.5 : 1.5, were mixed with N-methylpyrrolidone (NMP) until uniform to prepare a positive electrode slurry (with a solid content of 70 wt%); and the slurry was coated onto both sides of an aluminum foil current collector, dried at 100°C, and then cold-pressed at 4 MPa at room temperature, followed by trimming, slicing, slitting, and tab welding to obtain a positive electrode plate.
(2) Preparation of negative electrode plate: Under a nitrogen protective atmosphere, N-methylpyrrolidone as a solvent and PVDF as a binder were mixed with stirring until uniform, Super P as a conductive agent was then added and stirred until uniformly mixed, and a negative electrode active material was then added and thoroughly stirred until uniformly mixed to obtain a negative electrode slurry (with a solid content of 50 wt%).

As for the negative electrode active material, it is obtained by thoroughly mixing the silicon-carbon composite negative electrode materials respectively prepared in the above examples and comparative examples with graphite until uniform, with the gram capacity of the resulting negative electrode material being 450 mAh/g.

The negative electrode slurry above was coated onto both sides of a copper foil current collector, dried at 100°C, and then cold-pressed at 4 MPa at room temperature, followed by trimming, slicing, slitting, and tab welding to obtain a negative electrode plate.

### (3) Assembly of lithium-ion battery

A PE porous polymer film was used as a separator. The prepared positive electrode plate, the separator, and the negative electrode plate were stacked in sequence such that the separator was located between the positive and negative electrode plates, followed by winding to obtain a bare cell. The bare cell was placed in an aluminum-plastic shell packaging and dried at 100°C under a relative vacuum pressure of -0.95 × 10⁵ Pa until the moisture content reached 100 ppm or less. An electrolyte was injected into the dried bare cell, wherein the electrolyte was composed of ethylene carbonate (EC), ethyl methyl carbonate (EMC), and diethyl carbonate (DEC) (the volume ratio of EC : EMC : DEC = 1 : 1 : 1), and LiPF6 (1.0M). Then, sealing, standing, formation (constant-current charging at 0.02 C for 2 h and then at 0.1 C for 2 h), shaping, and capacity test (capacity grading) were performed to produce a pouch-type liquid lithium-ion battery.

During battery assembly, five batteries were prepared for each test group, and five sets of data were tested. The final performance was reported as the average of these five sets of data.

The cycling performance of the batteries was tested on an apparatus manufactured by Neware, and the specific details were as follows:
**Initial coulombic efficiency test:** At 25°C, the battery was first discharged at 0.1 C to 0.005 V, then discharged at 0.08 C to 0.001 V, discharged at 0.05 C to 0.001 V, discharged at 0.02 C to 0.001 V, and then left to stand for 10 min; and the battery was then charged at 0.1 C to 1.5 V and left to stand for 10 min. The charge and discharge capacities after the first cycle were recorded to calculate the initial coulombic efficiency.
**Cycling capacity retention rate test:** The battery was cycled for 500 times as described above. The charge and discharge capacities after 500 cycles were recorded to calculate the capacity retention rate after 500 cycles.
**Rate performance test:** The battery was charged at 1 C and then discharged at a current of 4 C. The discharge capacity and the capacity retention rate at 1 C were tested.

**Table 2 Performance of various examples and comparative examples**

| | | Silicon-carbon negative electrode material/lithium battery | | |
|---|---|---|---|---|
| | Lithium intercalation specific capacity (mAh/g) | Initial coulombic efficiency (%) | Capacity retention rate after 500 cycles (%) | 4C/1C rate performance (%) |
| Example 1 | 1891 | 89.8 | 98.1 | 92.7 |
| Example 2 | 2103 | 90.2 | 98.3 | 93.0 |
| Example 3 | 2041 | 91.7 | 97.9 | 92.5 |
| Example 4 | 1987 | 91.9 | 99.2 | 94.2 |
| Comparative Example 1 | 2300 | 89 | 70.6 | 67.8 |
| Comparative Example 2 | 400 | 35 | 54.7 | 50.9 |
| Comparative Example 3 | 1800 | 89 | 95.8 | 83.1 |

As can be seen from Table 1, both the lithium intercalation specific capacity and capacity retention rate after 500 cycles of the silicon-carbon negative electrode material of Comparative Example 1, in which no polymer was compounded, are inferior to those of Examples 1-4. For Comparative Example 2, the lack of pore formation results in lower lithium intercalation specific capacity, initial coulombic efficiency, and capacity retention rate after 500 cycles compared to Examples 1-4. Regarding Comparative Example 3, where steps (1)-(3) were omitted and the polymer was directly carbonized to prepare porous carbon, the lack of carbon tubes leads to deteriorated electrical conductivity of the negative electrode material, thereby causing a significant deterioration in performance.

In summary, in the present application, yarn ball-like carbon tubes are used to construct a macroporous material to accommodate ordered micro-mesoporous carbon with a moderate hardness, which then accommodate elemental nano-silicon with an excessive hardness. On the one hand, the ordered micro-mesoporous carbon with a higher strength is categorized as hard carbon, which provides the composite material with a higher strength and thus can significantly reduce the risk of the negative electrode material being fractured during the rolling process in electrode plate fabrication, thereby enhancing the processing safety during electrode plate fabrication. On the other hand, the flexible carbon tubes provide the composite material with a certain degree of elasticity and ductility, which can prevent the composite material from detaching from the electrode plate due to volume expansion during the charge-discharge process, thus avoiding a sharp deterioration in cycling performance of the battery.

The above examples only illustrate the principles and effects of the present invention, but are not used to limit the present application. Those skilled in the art can modify or change the above examples without departing from the spirit and scope of the present application. Therefore, all equivalent modifications or changes made by those of ordinary skill in the art without departing from the spirit and technical ideas disclosed in the present invention shall still be covered by the claims of the present application.

## Claims

1. A porous composite elastomer, **characterized by** having a porous structure and comprising an interpenetrating flexible body and rigid body, wherein a raw material of the flexible body comprises carbon nanotubes, and the rigid body is hard carbon.

2. The porous composite elastomer of claim 1, **characterized in that** the porous composite elastomer contains uniformly distributed micropores and/or mesopores;
and/or a mass ratio of the flexible body to the rigid body is (0.01-2) : 1.

3. The porous composite elastomer of claim 2, **characterized by** comprising one or more of the following features:
a1) the porous composite elastomer has an average pore size of < 15 nm;
a2) the porous composite elastomer has a total pore volume of 0.2-1.5 cm³/g;
a3) the porous composite elastomer has a specific surface area of > 200 m²/g;
a4) the porous composite elastomer has a D₅₀ of < 30 µm;
a5) the porous composite elastomer has a tap density of 0.1-1.0 g/cm3;
a6) the porous composite elastomer has an electrical resistivity of < 5 Ω·cm, preferably < 0.5 Ω·cm; and
a7) the porous composite elastomer has a pore size concentration ratio of < 7.

4. The porous composite elastomer of claim 3, **characterized by** comprising one or more of the following features:
a1) the porous composite elastomer has an average pore size of 1.8-10 nm;
a2) the porous composite elastomer has a total pore volume of 0.4-1.1 cm³/g;
a3) the porous composite elastomer has a specific surface area of > 700 m²/g;
a4) the porous composite elastomer has a D₅₀ of < 20 µm;
a5) the porous composite elastomer has a tap density of 0.2-0.7 g/cm³;
a6) the porous composite elastomer has an electrical resistivity of < 0.05 Ω·cm; and
a7) the porous composite elastomer has a pore size concentration ratio of 0.5-5.

5. A preparation method for the porous composite elastomer of any one of claims 1-4, **characterized by** comprising the following steps:
S1: preparation of a carbon tube agglomerate: shaping carbon nanotubes into the carbon tube agglomerate;
S2: preparation of a carbon tube composite elastomer: adding the carbon tube agglomerate to a solution containing a soft template and a polymer, and allowing the solution to infiltrate into the carbon tube agglomerate, followed by heating and curing to obtain the carbon tube composite elastomer; and
S3: preparation of a porous composite elastomer: subjecting the carbon tube composite elastomer to high-temperature carbonization and activation treatments to obtain the porous composite elastomer.

6. The preparation method of claim 5, **characterized in that** in step S1, the shaping is carried out using a shaping machine;
and/or, in step S1, the carbon nanotubes have a length of 0.1-50 µm, and a tube diameter of 2-20 nm;
and/or, in step S1, the carbon tube agglomerate is spherical or spheroidal;
and/or, in step S1, the carbon tube agglomerate has a sphericity Sh10% ≥ 0.70;
and/or, in step S1, the carbon tube agglomerate has a sphericity Sh50% ≥ 0.80;
and/or, in step S1, the carbon tube agglomerate has a sphericity Sh90% ≥ 0.85;
and/or, in step S1, the carbon tube agglomerate has a D₅₀ of 1-100 µm;
and/or, in step S1, the carbon tube agglomerate has a yarn ball-like structure.

7. The preparation method of claim 6, **characterized in that** the shaping machine operates with a main unit frequency of 5-60 Hz, an auxiliary unit frequency of 20-90 Hz and a blower frequency of 8-30 Hz for an operation time of 2-100 min.

8. The preparation method of claim 5, **characterized in that** an intermediate modification treatment is further comprised between step S1 and step S2: adding the carbon tube agglomerate to an acidic solution and stirring same, followed by filtration to obtain a solid; and washing the solid until neutral, and drying same to obtain a modified carbon tube agglomerate.

9. The preparation method of claim 8, **characterized in that** the mass ratio of the carbon tube agglomerate to the acidic solution is (0.1-100) : 1;
and/or, the acidic solution is selected from one or more of nitric acid, sulfuric acid and hydrochloric acid;
and/or, the reaction under stirring is carried out at a temperature of 30-100°C for 2-12 h;
and/or, the washing is carried out with pure water; the drying is carried out in a drying oven;
and/or, the drying is carried out at a temperature of 60-100°C for 2-48 h.

10. The preparation method of claim 5, **characterized in that** in step S2, a monomer of the polymer is selected from formula I: 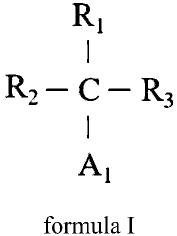 wherein, A₁ is selected from X, OH, NH₂, or a phenyl ring substituted by X, OH, or NH₂; X is a halogen atom selected from F, Cl, Br and I; R₁, R₂, and R₃ are each independently selected from at least one of H, unsubstituted or substituted phenyl, unsubstituted or substituted C₁-C₂₀ alkyl, and unsubstituted or substituted C₁-C₂₀ alkoxy; and a substituent group in the substituted phenyl, a substituent group in the substituted C₁-C₂₀ alkyl, and a substituent group in the substituted C₁-C₂₀ alkoxy are each independently selected from at least one of halogen, OH or NH₂.

11. The preparation method of claim 5 or 10, **characterized in that** in step S2, the polymer is selected from one or more of polyethylene glycol, aqueous polyurethane, polyvinyl alcohol, polyvinylidene fluoride, a fluorinated copolymer, polyimide, polyacrylic acid, polyacrylate, poly(methyl methacrylate), phenolic resin, epoxy resin, or ionic resin.

12. The preparation method of claim 5, **characterized in that** in step S2, the soft template is selected from a nonionic surfactant or an ionic surfactant;
and/or, in step S2, the mass ratio of the carbon tube agglomerate to the polymer is (0.1-10) : 1;
and/or, in step S2, the solid content of the polymer in the solution is 20-100%;
and/or, in step S2, the infiltration of the solution into the carbon tube agglomerate is carried out under a negative pressure;
and/or, in step S2, the curing is carried out at a temperature of 80-200°C for 0.5-50 h;
and/or, in step S2, a solvent is evaporated after curing to obtain a carbon tube composite carbon material.

13. The preparation method of claim 12, **characterized in that** in step S2, the nonionic surfactant is selected from a polyoxyethylene-polyoxypropylene copolymer;
and/or, the ionic surfactant is selected from hexadecyltrimethylammonium bromide and/or sodium dodecyl sulfonate;
and/or, the negative pressure is -0.9 to -0.01 MPa, and the duration of the negative pressure is 0.5-10 h;
and/or, the negative pressure is followed by a positive pressure treatment; and a positive pressure is 0.15-2 MPa, and a pressure holding time is 0.5-48 h;
and/or, the mass ratio of the carbon tube agglomerate to the polymer is 1 : 3.

14. The preparation method of claim 5, **characterized in that** in step S3, the carbonization treatment comprises subjecting the carbon tube composite carbon material to a high-temperature reaction under a protective gas.

15. The preparation method of claim 14, **characterized in that** the protective gas in the carbonization treatment is selected from one or more of nitrogen, neon, argon, krypton, xenon, and radon;
and/or, the flow rate of the protective gas is 1-20 L/min;
and/or, the temperature of the high-temperature reaction is 500-1000°C;
and/or, the duration of the high-temperature reaction is 1-30 h;
and/or, the heating rate of the high-temperature reaction is 1-10°C/min;
and/or, a post-treatment step is further comprised after the high-temperature reaction: cooling to room temperature.

16. A silicon-carbon, **characterized by** comprising, as a raw material, the porous composite elastomer of any one of claims 1-4, and further comprising nano-silicon particles, wherein the nano-silicon particles are embedded in the porous composite elastomer.

17. The silicon-carbon of claim 16, **characterized by** comprising one or more of the following features:
b1) the silicon-carbon has a specific surface area of < 20 m²/g;
b2) the silicon-carbon has a D₅₀ of < 20 µm;
b3) the silicon-carbon has a tap density of 0.5-2 g/cm³;
b4) the content of the nano-silicon particles is 30-70% of the total mass of the silicon-carbon;
b5) the silicon-carbon has an electrical resistivity of < 20 Ω·cm;
b6) the silicon-carbon has a specific capacity of > 1200 mAh/g, an initial coulombic efficiency of > 89%, a capacity retention rate after 500 cycles of > 85%, and a 4C/1C rate performance of > 90%.

18. A preparation method for the silicon-carbon of either of claims 16-17, **characterized by** comprising: subjecting the porous composite elastomer and a silicon source-containing gas to vapor deposition in a high-temperature environment to obtain the silicon-carbon.

19. The preparation method of claim 18, **characterized in that** the high-temperature environment is a deposition furnace, with a high temperature of 300-600°C and a holding time of 1-50 h;
and/or, the silicon source gas is selected from one or more of silane, disilane, dichlorosilane, and trichlorosilane;
and/or, the silicon source-containing gas further comprises a carbon source gas;
and/or, the time for the vapor deposition is 1-50 h.

20. The preparation method of claim 19, **characterized in that** an internal pressure of the deposition furnace is 5-10 MPa, and a heating rate is 1-5°C /min;
and/or, the carbon source gas is selected from alkane gases having a pyrolysis temperature of 600°C or less;
and/or, when the silicon source-containing gas is only the silicon source gas, the flow rate of the gas is 1-20 L/min;
and/or, when the silicon source-containing gas comprises the silicon source gas and the carbon source gas, the volume percentage of the silicon source gas is 70-99%, and the volume percentage of the carbon source gas is 1-30%, based on the total volume of the gas;
and/or, when the silicon source-containing gas comprises the silicon source gas and the carbon source gas, the flow rate of the gas is 5-20 L/min;
and/or, the time for the vapor deposition is 10-30 h.

21. A carbon-coated silicon-carbon, **characterized by** comprising the silicon-carbon of either of claims 16-17 and a carbon coating layer coated on the surface of the silicon-carbon.

22. The carbon-coated silicon-carbon of claim 21, **characterized in that** the carbon-coated silicon-carbon has a carbon coating amount of 0.5-10 wt%;
and/or, the carbon-coated silicon-carbon has a median particle size D₅₀ of < 20 µm;
and/or, the carbon-coated silicon-carbon has a silicon content of 20-80 wt%;
and/or, the carbon-coated silicon-carbon has a specific surface area of 0.5-20.0 m²/g;
and/or, the carbon-coated silicon-carbon has a powder compaction density of 0.5-2 g/cm³.

23. A preparation method for the carbon-coated silicon-carbon of either of claims 21-22, **characterized by** comprising introducing a mixed gas comprising a protective gas and a carbon source gas to coat a silicon-carbon, so as to form the carbon-coated silicon-carbon.

24. The preparation method of claim 23, **characterized in that** the carbon source gas is selected from alkane gases having a pyrolysis temperature of 600°C or less;
and/or the protective gas is selected from one or more of nitrogen, neon, argon, krypton, xenon, and radon;
and/or, the flow rate of the mixed gas is 0.1-50 L/min;
and/or, the volume percentage of the carbon source gas is 60-80%, and the volume percentage of the protective gas is 20-40%, based on the total volume of the mixed gas.

25. A silicon-carbon composite negative electrode material, **characterized by** comprising: as a raw material, the porous composite elastomer of any one of claims 1-4, the silicon-carbon of either of claims 16-17, or the carbon-coated silicon-carbon of either of claims 21-22.

26. Use of the porous composite elastomer of any one of claims 1-4, the silicon-carbon of either of claims 16-17, the carbon-coated silicon-carbon of either of claims 21-22, or the silicon-carbon composite negative electrode material of claim 25 in the preparation of a battery product.

27. A lithium-ion battery, **characterized by** comprising: as a raw material, the porous composite elastomer of any one of claims 1-4, the silicon-carbon of either of claims 16-17, the carbon-coated silicon-carbon of either of claims 21-22, or the silicon-carbon composite negative electrode material of claim 25.
